# EUROPÄISCHE PATENTSCHRIFT

(11) **EP 0 325 943 B1**
(45) Veröffentlichungstag und Bekanntmachung des Hinweises auf die Patenterteilung: **11.08.1993**
(21) Anmeldenummer: 89100391.5
(22) Anmeldetag: 11.01.1989
(51) Int. Cl.: F16D 1/08, F04D 29/20

(54) **Schnellverbindung zwischen einer Welle und einer aufgesetzten Nabe**
Quick connection between a shaft and a hub mounted on it
Accouplement rapide entre un arbre et un moyeu

(30) Priorität: 27.01.1988 DE 3802326
(43) Veröffentlichungstag der Anmeldung: 02.08.1989
(73) Patentinhaber: FORD-WERKE AKTIENGESELLSCHAFT, 50725 Köln (DE); FORD FRANCE SOCIETE ANONYME, 92506 Rueil Malmaison Cedex (FR); FORD MOTOR COMPANY LIMITED, Brentwood, Essex CM13 3BW (GB)
(72) Erfinder: Wirtz, Hans Peter, D-5000 Köln 71 (DE); Lequis, Rolf, D-5205 Hennef 41 (DE)
(74) Vertreter: Messulam, Alec Moses

(56) Entgegenhaltungen:
- DE-C- 676 349
- FR-A- 2 190 209
- FR-E- 88 080
- GB-A- 547 988
- GB-A- 2 071 270
- US-A- 3 329 452
- US-A- 4 209 266
- US-A- 4 214 793

## Beschreibung

Die Erfindung bezieht sich auf eine Schnellverbindung zwischen einer Welle und einer aufgesetzten Nabe.

Aus der DE-OS 20 04 482 ist eine Einrichtung zur Befestigung eines Drehknopfes auf einer Welle bekannt, wobei die Welle eine Abflachung und die Nabe zumindest eine Aufnahme für ein Federglied aus Stahlblech aufweist, das radial federnd mit Teilen der Welle und der Nabe zusammenwirkt, um eine drehfeste Verbindung herzustellen.

Die bekannte Einrichtung weist den Nachteil auf, daß ein Aufstecken des Drehknopfes auf seiner Welle nur bei lagerichtiger Zuordnung von Drehknopf und Welle möglich ist. Sind die beiden Bauteile nicht entsprechend ausgerichtet, so ist eine Montage nicht möglich.

Aus der DE-OS 33 45 323 ist ein Motorpumpenaggregat bekannt, bei dem die Rotorwelle über eine Zwischenhülse mit nach außen gerichteten Nocken mit einer Pumpenradnabe mit nach innen gerichteten Nasen an federnden Bremslappen und nach innen gerichteten Anschlägen eine Bremseinrichtung bildet, die bei einem Anlauf der Rotorwelle in der nicht gewünschten Drehrichtung eine Bremswirkung bereitstellt und bei einer Drehung der Rotorwelle in die gewünschte Richtung eine drehfeste Verbindung zwischen den Nocken der Zwischenhülse und den inneren Anschlägen der Pumpenradnabe herstellt.

Bei dieser bekannten Verbindung zwischen einer Rotorwelle und einer Pumpenradnabe tritt wieder der Nachteil auf, daß die hier zusammenwirkenden drei Bauteile nur bei einer entsprechenden Ausrichtung axial montierbar sind. Das setzt voraus, daß bei der Montage die Lage der Rotorwelle, der Zwischenhülse und der Pumpenradnabe visuell erfaßbar ist und manuell in entsprechende Übereinstimmung gebracht werden kann.

Aus der GB-A-547 988 ist eine Schnellverbindung zwischen einer Welle und einer aufgesetzten Nabe, bekannt, wobei in der Nabe eine Aufnahme für ein bogenförmiges Federglied aus Stahlblech mit radial nach innen federnden Zungen und in der Welle winkelförmige Ausnehmungen zum zusammenwirken mit den Federzungen vorgesehen sind.

Bei dieser bekannten Schnellverbindung sind die an der Welle ausgebildeten winkelförmigen Ausnehmungen nach Art einer Verzahnung ausgebildet, d.h. deren beide Flächen liegen schräg zur radialen Richtung.

Das in einer bogenförmig verlaufenden Aufnahme in der Nabe aufgenommene gewölbte Federglied weist dementsprechend verhältnismäßig steil nach innen abgewinkelte Federzungen auf und das Wellenende weist eine Anfasung auf, deren kleinster Durchmesser kleiner ist als der den abgewinkelten Federzungen eingeschriebene Durchmesser.

Durch die steil abgewinkelten Federzungen ist ein Aufschieben der Habe mit eingelegtem Federglied wohl nur dann möglich, wenn die abgewinkelten Federzungen auf eine entsprechende winkelförmige Ausnehmung in der Welle treffen. Daher sind entsprechend eine Vielzahl von winkelförmigen Ausnehmungen vorgesehen, d.h. die winkelförmigen Ausnehmungen bilden eine Art Verzahnung, wie z.B. eine Kerb- oder Rändelverzahnung.

Mit der Schnellverbindung gemäß dem Stand der Technik kann die der Erfindung zugrundeliegende Aufgabe nicht gelöst werden.

Die Aufgabe der Erfindung nämlich ist es, eine Schnellverbindung zwischen einer Welle und einer aufgesetzten Nabe etwa der im Oberbegriff des Patentanspruches 1 erläuterten Art derart zu verbessern, daß ein Montieren der miteinander drehfest zu verbindenden Bauteile unabhängig von der jeweiligen Lage der erforderlichen Abflachungen, Ausnehmungen, Aufnahmen und dergleichen lediglich durch ein axiales Aufpressen möglich ist und sich die eigentliche drehfeste Abstützung in der gewünschten Drehrichtung bei einer anfänglichen Relativdrehung der Bauteile zueinander selbsttätig herstellt.

Gemäß der Erfindung wird diese Aufgabe gelöst, indem bei einer Schnellverbindung zwischen einer Welle und einer aufgesetzten Nabe gemäß Patentanspruch 1 und 2.

Dadurch, daß die Ausnehmung an der Welle und/oder in der Nabenbohrung als zumindest eine winkelförmige Ausnehmung ausgebildet ist, deren eine Fläche etwa in tangentialer und deren andere Fläche etwa in radialer Richtung liegt und in der Nabenbohrung und/oder an der Welle zumindest eine sich in Umfangsrichtung bogenförmig erstreckende Aufnahme vorgesehen ist, die ein gewölbtes Federglied aufnimmt, das radial nach innen und/oder nach außen abgewinkelte Federzungen aufweist und wobei das Wellenende und/oder die Nabenbohrung eine Anfasung aufweist, deren kleinster bzw. größter Durchmesser kleiner bzw. größer als der den abgewinkelten Federzungen eingeschriebene bzw. umschriebene Durchmesser ist, wird ein einfaches Montieren der beiden zusammenzufügenden Bauteile durch ein axiales Aufpressen ermöglicht, indem die Anfasungen ein radiales nach außen bzw. nach innen Einfedern in die Ebene des Federgliedes erzwingen und die Federzungen erst bei einer anfänglichen Relativdrehung der beiden Bauteile zueinander in die für sie vorgesehenen winkelförmigen Ausnehmungen einfallen können.

Dadurch, daß an der Welle bzw. in der Nabenbohrung mehrere am Umfang verteilte winkelförmige Ausnehmungen vorgesehen sind und ein durchgehender Absatz an der Welle bzw. an der Nabenbohrung ein hülsenförmiges Federglied aufnimmt, an dem entsprechende Gruppen von abgewinkelten Federzungen vorgesehen sind, kann die erwünschte Drehmomentübertragungsfähigkeit mit einem einzigen Federgliedbauteil und einer dementsprechend einfacheren Montage sichergestellt werden.

Dadurch, daß das hülsenförmige Federglied geschlitzt ausgeführt ist und über geschlossene öffnungen in die Teile der Nabenbohrung einragend axial und radial festgelegt ist, kann ein unerwünschtes Herausgleiten des die drehfeste Verbindung bereitstellenden Federgliedes vermieden werden.

Die Erfindung wird anhand eines in den beiliegenden Zeichnungen gezeigten Ausführungsbeispieles näher erläutert.

Es zeigt:
- Fig. 1: Einen vertikalen Schnitt durch eine Schnellverbindung gemäß der Erfindung;
- Fig. 2: einen Schnitt entlang der Linie II-II in Fig. 1;
- Fig. 3: einen ähnlichen Schnitt wie Fig. 2, einer weiteren Ausführungsform der Erfindung mit einem hülsenförmigen Federglied;
- Fig. 4: Draufsichten auf mögliche Ausführungsformen a, b und c eines Federgliedes;
- Fig. 5: eine Draufsicht auf mögliche Ausführungsformen a, b und c der Federzungen an einem hülsenförmigen Federglied;
- Fig. 6: einen vertikalen Schnitt durch eine weitere Ausführungsform der Schnellverbindung gemäß der Erfindung;
- Fig. 7: einen Schnitt entlang der Linie VII-VII in Fig. 6 und
- Fig. 8: eine Teilabwicklung des hülsenförmigen Federgliedes nach den Figuren 6 und 7.

In den Figuren ist eine Schnellverbindung zwischen einer Welle und einer aufgesetzten Habe für den Anwendungsfall innerhalb eines automatischen Getriebes für Kraftfahrzeuge gezeigt, bei dem eine Wandlerhohlwelle 1 sich in den Bereich eines Druckmittelpumpengehäuses 2 erstreckt, in dem zusammenwirkende Zahnräder untergebracht sind, wovon das eine Pumpenzahnrad 3 durch die Wandlerhohlwelle 1 angetrieben werden soll.

An der Wandlerhohlwelle 1 ist zu diesem Zweck eine winkelförmige Ausnehmung 4 vorgesehen, deren eine Fläche 5 etwa in tangentialer und deren andere Fläche 6 etwa in radialer Richtung liegt.

In der Nabenbohrung 7 des Pumenpzahnrades 3 ist eine oder mehrere sich in Umfangsrichtung bogenförmig erstreckende Aufnahmen 8 vorgesehen, in der je ein gewölbtes Federglied 9 aus Stahlblech axial angeordnet werden kann, das eine nach innen abgewinkelte Federzunge 10 aufweist. Die Aufnahmen 8 können in einem z.B. gesinterten Pumpenzahnrad 3 unmittelbar hergestellt sein. Ein axialer Abschnitt 11 und die radialen Abschnitte der Nabenbohrung 7 zwischen den Aufnahmen 8 sorgen für die Zentrierung des Pumpenzahnrades 3.

Das Wellenende der Wandlerhohlwelle 1 ist mit einer Anfasung 12 versehen, deren kleinster Durchmesser kleiner ist als der Durchmesser der den vor der Montage nach innen abgewinkelten Federzungen 10 eingeschrieben werden kann.

Bei der Montage der erfindungsgemäßen Schnellverbindung bildet das Druckmittelpumpengehäuse 2 einen Teil einer bereits montierten Getriebeeinheit und die Wandlerhohlwelle 1 bildet einen Teil einer gleichfalls montierten Drehmomentwandlereinheit, so daß das axiale Zusammenfügen dieser beiden Baugruppen nicht ohne weiteres durch visuelle Wahrnehmung und manuelle Ausrichtung zu beeinflussen ist.

Durch die erfindungsgemäße Schnellverbindung ist auch eine solche Ausrichtung nicht mehr erforderlich und es ist lediglich notwendig, die beiden Baugruppen axial aufeinander zuzubewegen, wodurch durch die Anfasung 12 an der Wandlerhohlwelle 1 die nach innen abgewinkelten Federzungen 10 der in die Aufnahmen 8 eingefügten Federglieder 9 aus Stahlblech radial einfedern und daher auch über Bereiche der Wandlerhohlwelle 1 aufgeschoben werden können, in denen die Ausnehmungen 4 nicht vorliegen. Erst bei einer darauffolgenden Relativdrehung zwischen der Wandlerhohlwelle 1 und dem Pumpenzahnrad 3 können die Federzungen 10 radial nach innen in die entsprechenden Ausnehmungen 4 an der Wandlerhohlwelle 1 einfallen und eine formschlüssige drehfeste Verbindung sicherstellen.

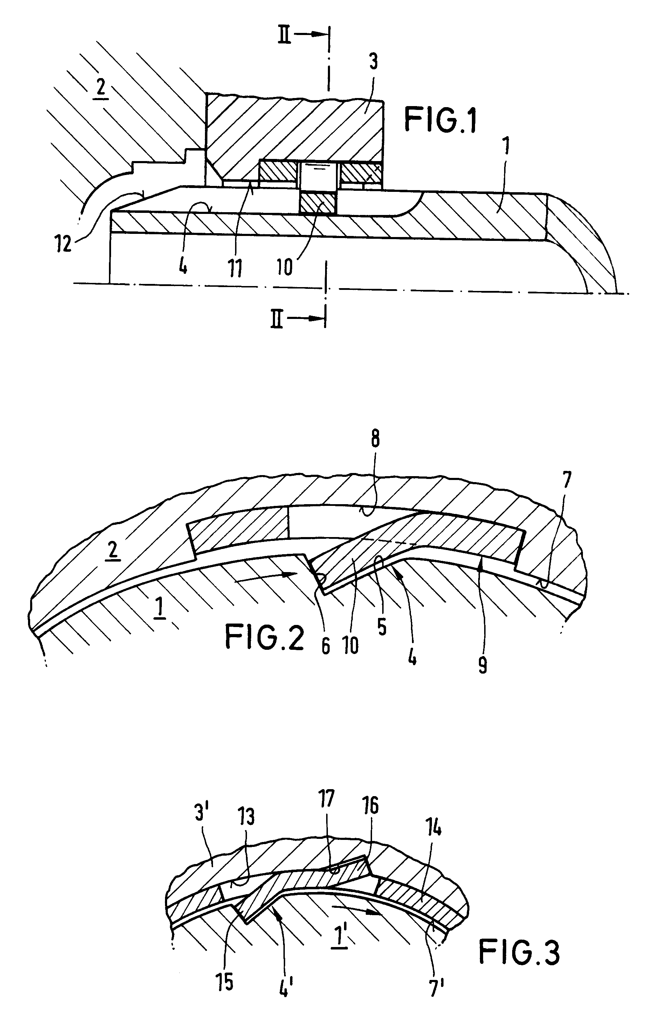

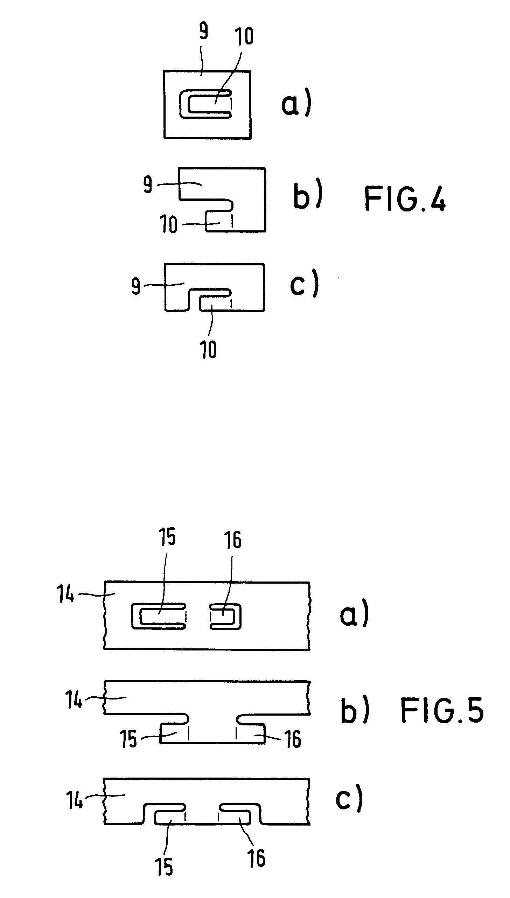

Für die in Zusammenhang mit den Figuren 1 und 2 verwendbaren Federglieder 9 sind in der Fig. 4 unterschiedliche Ausführungsformen mit a, b und c bezeichnet gezeigt.

Bei der in Fig. 3 gezeigten Ausführungsform ist wieder eine Welle 1' mit einer winkelförmigen Ausnehmung 4' versehen und eine Nabe 3' ist mit einem durchgehenden Absatz 13 versehen, in dem ein hülsenförmiges Federglied 14 aufgenommen wird.

An dem hülsenförmigen Federglied 14 sind sowohl nach innen als auch nach außen abgewinkelte Federzungen 15 und 16 vorgesehen, die einerseits mit den Ausnehmungen 4' in der Welle 1' und andererseits mit entsprechenden Ausnehmungen 17 in der Habe 3' zusammenwirken.

Selbstverständlich muß in diesem Fall nicht nur am Wellenende der Welle 1' eine entsprechend große Anfasung vorgesehen werden, sondern auch am Eintrittsende des Absatzes 13 der Nabenbohrung 7' muß eine entsprechende Anfasung vorgesehen werden.

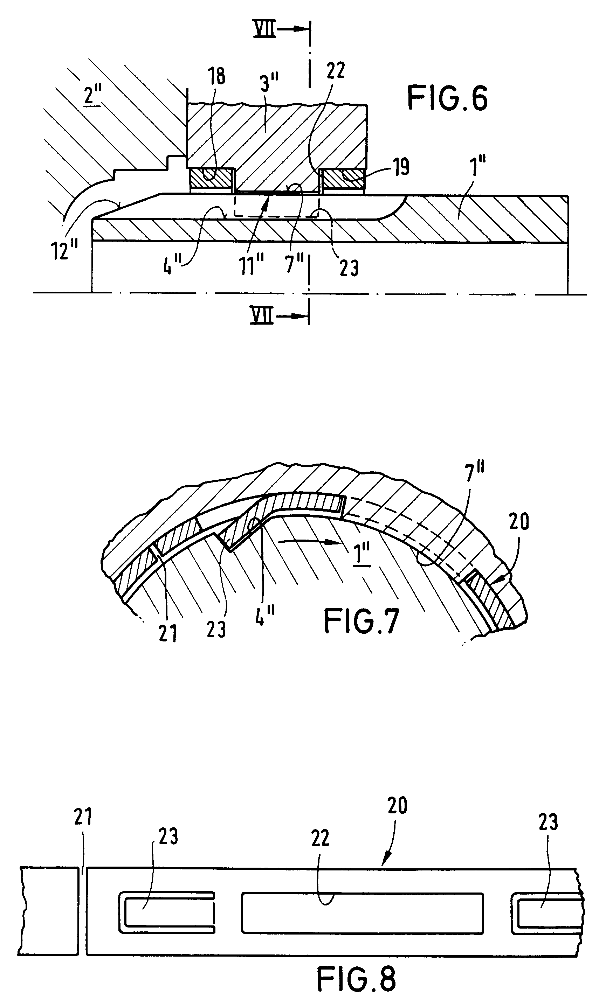

In Fig. 5 sind mögliche Ausführungsformen eines hülsenförmigen Federgliedes 14 in unterschiedlichen Ausführungen a, b und c aufgezeigt.

Bei der in den Figuren 6 bis 8 gezeigten Ausführungsform der Erfindung ist ein besonders aufwendiges Federglied mit axialer und radialer Festlegung vorgesehen.

An einer Wandlerhohlwelle 1'' sind wieder die entsprechenden winkelförmigen Ausnehmungen 4'' ausgebildet und das Wellenende ist mit einer entsprechenden Anfasung 12'' versehen. Das in einem Druckmittelgehäuse 2'' aufgenommene Pumpenzahnrad 3'' ist über eine mittleren Bereich 11'' und radialen Abschnitte 7''auf der Wandlerhohlwelle 1'' zentriert und weist seitlich davon zwei durchgehende Absätze 18 und 19 auf, in denen die Seitenstreifen eines hülsenförmigen Federgliedes 20 aufgenommen werden, das an einer radialen Stelle einen Schlitz 21 aufweist. Das Federglied 20 weist hierbei in seinem mittleren Bereich eine öffnung 22 auf, die mit entsprechenden Abschnitten des Bereiches 11'' der Nabenbohrung 7'' abgestimmt ist.

Das hülsenförmige Federglied 20 kann durch den radialen Schlitz 21 in seinem Durchmesser so verkleinert werden, daß es axial in die Nabenbohrung 7'' eingebracht wird und dann mit seiner öffnung 22 über die entsprechenden Abschnitte im Bereich 11'' der Habenbohrung 7'' aufgesetzt werden kann. Dadurch wird das Federglied 20 sowohl in axialer als auch in radialer Richtung am Pumpenzahnrad 3'' festgelegt. Selbstverständlich weist auch das Federglied 20 wieder mehrere nach innen abgewinkelte Federzungen 23 auf, die in bereits erläuterter Weise in drehfestem Eingriff mit den entsprechenden Ausnehmungen 4'' an der welle 1'' gelangen, sobald zwischen den zunächst ohne eine winkelmäßige Ausrichtung miteinander montierten Baugruppen eine erste Relativdrehung auftritt.

Selbstverständlich kann das Maß der Ausnehmungen zur Aufnahme der Federglieder aus Stahlblech in ihrer Tiefe so bemessen werden, daß die erforderlichen radialen Federbewegungen der Federzungen innen oder außen ermöglicht werden.

## Patentansprüche

1. Schnellverbindung zwischen einer Welle (1) und einer Nabe (3), wobei in der Nabenbohrung (7) der Nabe (3) eine Aufnahme (8) für ein bogenförmiges Federglied (9) aus Stahlblech ausgebildet ist, das Federglied (9) zumindest eine radial nach innen federnde Zunge (10) aufweist und an der Welle (1) zumindest eine winkelförmige Ausnehmung (4) vorgesehen ist, die mit einer Federzunge (10) eine drehfeste Verbindung herstellend zusammenwirkt und wobei das Wellenende der Welle (1) mit einer Anfasung (12) versehen ist, deren kleinster Durchmesser kleiner als der der nach innen abgewinkelten Federzunge (10) eingeschriebene Durchmesser ist und daß
die winkelförmige Ausnehmung (4) an der Welle (1) derart ausgebildet ist, daß deren eine Fläche (5) etwa in tangentialer und deren andere Fläche (6) etwa in radialer Richtung liegen.

2. Schnellverbindung zwischen einer Welle (1') und einer Nabe (3'), wobei in der Welle (1') eine Aufnahme (13) für ein bogenförmiges Federglied (14) aus Stahlblech ausgebildet ist, das Federglied (14) zumindest eine nach außen federnde Zunge (16) aufweist und in der Nabenbohrung (7') zumindest eine winkelförmige Ausnehmung (17) vorgesehen ist, die mit einer Federzunge (16) eine drehfeste Verbindung herstellend zusammenwirkt und wobei die Nabenbohrung (7') mit einer Anfasung (12) versehen ist, deren größter Durchmesser größer als der der nach außen abgewinkelten Federzunge (16) umschriebene Durchmesser ist und daß die winkelförmige Ausnehmung (17) in der Nabenbohrung (7) derart ausgebildet ist, dass deren eine Fläche etwa in tangentialer und deren andere Fläche etwa in radialer Richtung liegen.

3. Schnellverbindung nach Anspruch 1 oder Anspruch 2,
dadurch gekennzeichnet, daß
an dem bogenförmigen Federglied (9) sowohl radial nach innen als auch radial nach außen abgewinkelte Federzungen (10) ausgebildet sind, die mit jeweils zumindest einer winkelförmigen Ausnehmung (4', 16) an der Welle (1') und in der Nabenbohrung (7') Zusammenwirkt.

4. Schnellverbindung nach einem der Ansprüche 1 bis 3, dadurch gekennzeichnet, daß
an der Welle (1') bzw, in der Nabenbohrung (7') mehrere am Umfang verteilte winkelförmige Ausnehmungen (4' bzw. 16) vorgesehen sind und ein durchgehender Absatz (18, 19) an der Welle (1') bzw. in der Nabenbohrung (7') vorgesehen ist, der ein hülsenförmiges Federglied (14) aufnimmt, an dem entsprechende Gruppen von nach außen und innen abgewinkelte Federzungen (15 bzw. 16) vorgesehen sind.

5. Schnellverbindung nach einem der Ansprüche 1-4,
dadurch gekennzeichnet, daß
das hülsenförmige Federglied (20) mit einem radialen Schlitz (21) und mit einer mittleren öffnung (22) in die ein Teil (11'') der Nabenbohrung (7'') einragen kann, versehen ist und das Federglied (20) somit axial und radial festgelegt ist.

## Claims

1. Quick-acting connection between a shaft (1) and a hub (3), wherein a socket (8) for a curved spring member (9) of sheet steel is formed in the bore (7) of the hub (3), the spring member (9) has at least one tongue (10) deflecting radially inwards, and on the shaft (1) at least one angular recess (4) is provided which cooperates with a spring tongue (10) to make a corotational connection, and wherein the end of the shaft (1) is provided with a chamfer (12) the smallest diameter of which is smaller than the diameter inscribed within the spring tongue (10) bent over inwards, and in that [sic] the angular recess (4) on the shaft (1) has a configuration such that its one surface (5) lies approximately in the tangential direction and its other surface (6) lies approximately in the radial direction.

2. Quick-acting connection between a shaft (1') and a hub (3'), wherein a socket (13) for a curved sheet-steel spring member (14) is formed in the shaft (1'), the spring member (14) has at least one tongue (16) deflecting outwards, and in the hub bore (7') at least one angular recess (17) is provided which cooperates with a spring tongue (16) to make a corotational connection, and wherein the hub bore (7') is provided with a chamfer (12) whose largest diameter is larger than the diameter circumscribed around the spring tongue (16) bent over outwards, and in that [sic] the angular recess (17) in the hub bore (7) has a configuration such that its one surface lies approximately in the tangential direction and its other surface lies approximately in the radial direction.

3. Quick-acting connection according to Claim 1 or Claim 2, characterised in that on the curved spring member (9) spring tongues (10) are formed which are bent over both radially inwards and radially outwards and which cooperates [sic] in each case with at least one angular recess (4', 16) on the shaft (1') and in the hub bore (7').

4. Quick-acting connection according to one of Claims 1 to 3, characterised in that on the shaft (1') and in the hub bore (7') respectively a plurality of angular recesses (4' and 16 respectively) distributed over the periphery are provided and a continuous step (18, 19) is provided respectively on the shaft (1') and in the hub bore (7') and receives a sleeve-like spring member (14) on which corresponding groups of spring tongues (15, 16 respectively) bent over outwards and inwards are provided.

5. Quick-acting connection according to one of Claims 1 to 4, characterised in that the sleeve-like spring member (20) is provided with a radial slit (21) and with a central opening (22) into which a part (11'') of the hub bore (7'') can project, and the spring member (20) is thus fastened axially and radially.

## Revendications

1. Raccord rapide entre un arbre (1) et un moyeu (3), un logement (8) étant réalisé dans l'alésage (7) du moyeu (3), pour un organe élastique (9) en forme d'arc, en tôle d'acier, l'organe élastique (9) présentant au moins une languette élastique (10) dotée d'une élasticité radiale vers l'intérieur et au moins un évidement anguleux (4) étant prévu sur l'arbre (1) et coopérant avec une languette élastique (10) en établissant une liaison à assujettissement en rotation et l'extrémité de l'arbre (1) étant pourvu d'un chanfreinage (12), dont le petit diamètre est inférieur au diamètre inscrit par la languette élastique (10) coudée vers l'intérieur et en ce que l'évidement anguleux (4) est réalisé sur l'arbre de telle façon que l'une (5) de ses surfaces est située à peu près suivant une direction tangentielle et son autre surface (6) à peu près suivant une direction radiale.

2. Raccord rapide entre un arbre (1') et un moyeu (3'), un logement (13) étant réalisé dans l'arbre (1'), pour un organe élastique (14) en forme d'arc, en tôle d'acier, l'organe élastique (14) présentant au moins une languette élastique (16) dotée d'une élasticité radiale vers l'extérieur et au moins un évidement anguleux (17) étant prévu dans l'alésage de moyeu (7') et coopérant avec une languette élastique (16) en établissant une liaison à assujettissement en rotation et l'alésage de moyeu (7') étant pourvu d'un chanfreinage (12), dont le grand diamètre est supérieur au diamètre circonscrit par la languette élastique (16) coudée vers l'extérieur et en ce que l'évidement anguleux (17) est réalisé dans l'alésage de moyeu (7') de telle façon que l'une de ses surfaces est située à peu près suivant une direction tangentielle et son autre surface à peu près suivant une direction radiale.

3. Raccord rapide selon la revendication 1 ou 2, caractérisé en ce que des languettes élastiques (10), coudées tant radialement vers l'intérieur qu'également radialement vers l'extérieur et coopérant avec chaque fois au moins un évidement anguleux (4',16) sur l'arbre (1') et dans l'alésage de moyeu (7'), sont réalisées sur l'organe élastique (9) en forme d'arc.

4. Raccord rapide selon l'une des revendications 1 à 3, caractérisé en ce que sur l'arbre (1'), respectivement dans l'alésage de moyeu (7') sont prévus plusieurs évidements anguleux (4', respectivement 16) distribués sur la périphérie et un décrochement continu (18,19) étant réalisé sur l'arbre (1'), respectivement dans l'alésage de moyeu (7') et reçoit un organe élastique (14) en forme de douille, sur lequel sont prévus les groupes correspondants de languettes élastiques (15 respectivement 16) coudées vers l'extérieur et vers l'intérieur.

5. Raccord rapide selon l'une des revendications 1 à 4, caractérisé en ce que l'organe élastique (20) en forme de douille est pourvu d'une fente radiale (21) et d'une ouverture médiane (22), dans laquelle peut pénétrer une partie (11'') de l'alésage de moyeu (7'') et l'organe élastique (20) étant ainsi fixé axialement et radialement.
